Europäisches Patentamt

(19) European Patent Office

Office européen des brevets

(11) Numéro de publication: **0 230 823 B1**

(12) **FASCICULE DE BREVET EUROPEEN**

(51) Int. Cl.⁴: **B60T 13/24**

(45) Date de publication du fascicule du brevet:
**15.11.89**

(21) Numéro de dépôt: **86402843.6**

(22) Date de dépôt: **17.12.86**

(54) Servomoteur d'assistance au freinage à double disque de réaction.

(30) Priorité: **08.01.86 FR 8600165**

(43) Date de publication de la demande:
**05.08.87 Bulletin 87/32**

(45) Mention de la délivrance du brevet:
**15.11.89 Bulletin 89/46**

(84) Etats contractants désignés:
**DE ES GB IT**

(56) Documents cités:
**EP-A- 0 014 146**
**US-A- 3 035 551**
**US-A- 3 110 031**
**US-A- 3 146 679**

(73) Titulaire: **BENDIX France Société Anonyme dite:,
126, rue de Stalingrad, F-93700 Drancy(FR)**

(72) Inventeur: **Gautier, Jean-Pierre, 46 ter Avenue Louis
Blanc, F-93600 Aulnay/Bois(FR)**

(74) Mandataire: **Lejet, Christian et al, Division Technique
Service Brevets BENDIX Europe 126, rue de Stalingrad,
F-93700 Drancy(FR)**

ACTORUM AG

## Description

La présente invention concerne les servomoteurs d'assistance au freinage du type décrit dans le preambule de la Revendication 1.

Un servomoteur d'assistance au freinage de ce type est décrit dans le document US-A-3 110 031. Dans les servomoteurs classiques de ce type, le disque de réaction, typiquement en matériau élastomère, est interposé directement entre l'extrémité arrière, généralement élargie, de la tige de sortie et l'extrémité avant, généralement de diamètre réduit, du plongeur, l'effort de réaction exercé sur la tige d'entrée, via le plongeur de valve, lors de la mise en oeuvre du servomoteur pour l'actionnement d'un maître-cylindre associé à ce dernier, étant déterminé par les sections transversales respectives de l'extrémité arrière de la tige (et du disque de réaction) et de l'extrémité avant du plongeur de valve, qui se situent généralement, dans un rapport d'environ 2,5.

La présente invention a pour objet de proposer des perfectionnements aux servomoteurs d'assistance de ce type permettant une sensibilité accrue lors de la mise en oeuvre du servomoteur et autorisant en conséquence une diminution notable du rapport de levier de la pédale d'actionnement de freinage et, partant, de la course de cette dernière, au moyen d'un agencement simple, robuste et fiable, n'entraînant que de très faibles surcoûts de fabrication et de montage, et adaptable tout type de servomoteur existant comportant un disque de réaction.

Pour ce faire, selon l'invention, le servomoteur d'assistance au freinage comprend en outre un second disque de réaction, confiné périphériquement, en contact de l'extrémité arrière de la tige de sortie, et un élément intermédiaire étagé interposé entre les deux disques de réaction et coopérant avec ces derniers, ledit élément intermédiaire comportant une portion avant de diamètre réduit s'étendant à coulissement dans un alésage central d'un élément d'entretoise annulaire formant un épaulement périphérique avant, l'épaulement périphérique avant et la portion avant étant en contact de la face arrière du second disque, et une portion arrière de diamètre sensiblement égal à celui du premier disque et en contact de la face avant de ce dernier.

De préférence, l'élément d'entretoise annulaire est solidaire d'une cage tubulaire supportée sur le piston d'assistance et dans laquelle sont confinés périphériquement, les deux disques.

Avec un tel agencement, le rapport de sensibilité du servomoteur devient le produit des rapports entre les sections transversales du second disque et de l'extrémité avant de la portion de diamètre réduit de l'élément intermédiaire, d'une part, et du premier disque et de l'extrémité avant du plongeur de valve, d'autre part.

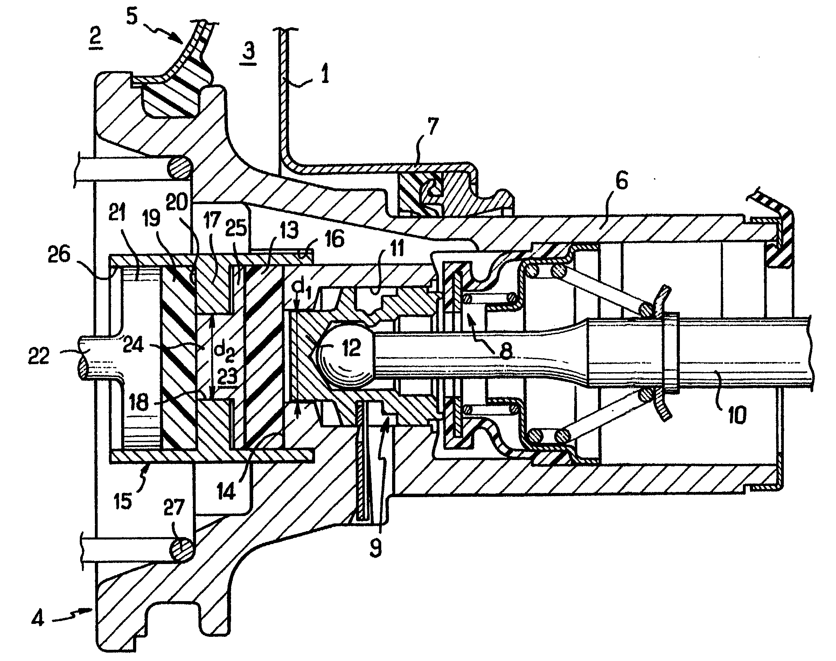

D'autres caractéristiques et avantages de la présente invention ressortiront de la description suivante d'un mode de réalisation, donné à titre illustratif mais nullement limitatif, faite en relation avec le dessin annexé, sur lequel :

la figure unique est une vue schématique en coupe longitudinale de la partie centrale arrière d'un servomoteur d'assistance au freinage selon l'invention.

Dans la description qui va suivre, et les revendications, les expressions "avant" et "arrière" se rapportent à l'orientation générale d'un véhicule dans lequel est installé le servomoteur, "l'avant" correspondant ainsi à la gauche de la Figure unique et "l'arrière" à la droite de la Figure.

On reconnaît sur la figure unique la partie centrale arrière d'un servomoteur pneumatique d'assistance au freinage comprenant un boîtier, dont on voit une portion de la coquille arrière 1, divisé intérieurement en une chambre avant, ou chambre de dépression, 2 et une chambre arrière, ou chambre de travail 3, par un piston d'assistance comprenant une partie de moyeu centrale 4 et un moyen de diaphragme périphérique 5. La partie de moyeu centrale 4 comporte une partie tubulaire arrière 6 de diamètre réduit coulissant dans une cheminée arrière 7 du boîtier et renfermant un moyen de valve de distribution, désigné généralement par la référence 8, actionné par un plongeur de valve 9 couplé à l'extrémité d'une tige d'entrée 10 reliée, à son autre extrémité, à une pédale de freinage de véhicule (non représentée). Le plongeur de valve 9 coulisse dans un alésage étagé central 11 de la partie de moyeu 4 et comporte une portion d'extrémité avant 12 de diamètre réduit $d_1$ destinée à coopérer, lors de la mise en oeuvre du servomoteur, avec un premier disque de réaction 13, typiquement en matériau élastomère, porté dans la partie de moyeu 4 et de diamètre supérieur au diamètre $d_1$, la portion périphérique annulaire arrière du premier disque 13 portant contre un épaulement central annulaire 14 de la partie du moyeu 4 entourant, coaxialement l'extrémité avant 12 du plongeur de valve 9.

Conformément à l'invention, le premier disque 13 est confiné périphériquement dans une cage tubulaire 15 reçue dans une gorge annulaire 16 de la partie de moyeu centrale 4 et comportant un élément d'entretoise annulaire s'étendant radialement vers l'intérieur 17, formé avantageusement d'une seule pièce métallique avec la cage 15, et définissant un alésage central 18 de diamètre $d_2$ avantageusement inférieur au diamètre $d_1$.

Dans la cage 15 est également confiné périphériquement un second disque de réaction 19, également en matériau élastomère, dont la portion annulaire périphérique de la face arrière est en contact contre la face annulaire avant 20 de l'élément d'entretoise annulaire 17, et dont la face avant porte contre une partie d'extrémité élargie 21, de même diamètre que le second disque 19, d'une tige de sortie 22 du servomoteur, destinée typiquement à être couplée à un piston primaire d'un maître-cylindre de freinage (non représenté). Selon un aspect de l'invention, entre les deux disques 13 et 19 est interposé un élément intermédiaire, désigné généralement par la référence 23, comprenant une portion avant de diamètre réduit 24 montée à coulissement dans l'alésage 18 de l'élément d'entretoise annulaire 17 et dont l'extrémité avant est destinée à coopérer avec la portion centrale de la face arrière du second disque 19, et une partie arrière 25 de diamètre élargi sensiblement égal à celui du premier disque 13 et dont la face arrière est destinée à coopérer avec la face avant du premier disque 13. Dans le mode de réalisation représenté, la cage 15 définit avantageusement, de part et d'autre de l'élément d'entretoise 17, un alésage de diamètre constant 26 dans lequel sont reçus l'extrémité arrière 21 de la tige de sortie 22, les deux disques avantageusement identiques 29 et 13, et la partie arrière 25 de l'élément intermédiaire 23.

Dans la position de repos du servomoteur représentée sur la figure unique, où le piston d'assistance 4,5 est positionné au voisinage de la coquille arrière 1 du boîtier de servomoteur par un ressort de rappel de piston 27 disposé dans la chambre à dépression 2, l'extrémité avant de la portion avant de diamètre réduit 12 du plongeur de valve 9 est décalée légèrement de la face arrière du premier disque 13 par ailleurs en contact contre l'épaulement central annulaire 14, la tige de sortie 22, sollicitée par le ressort de rappel du piston de maître-cylindre, plaçant, par son extrémité arrière élargie 21, le second disque de réaction 19 contre l'épaulement annulaire avant 20 de l'élément d'entretoise 17 et contre l'extrémité avant de la portion avant de diamètre réduit 24 de l'élément intermédiaire 23 dont la face arrière est en contact avec la face avant du premier disque 13. Dans ces conditions, on prévoira avantageusement un léger jeu entre la face avant annulaire de la partie arrière de diamètre élargie 25 de l'élément intermédiaire 23 et la face annulaire arrière adjacente de l'élément d'entretoise 17.

Le fonctionnement du servomoteur selon l'invention est en tout point identique à celui des servomoteurs classiques si ce n'est que, lors de la mise en oeuvre du servomoteur, quand le plongeur de valve 9 est avancé vers l'avant pour actionner le moyen de valve de distribution 8, et que son extrémité avant 12 vient ainsi en appui contre la partie centrale du premier disque 13, la force de réaction transmise de la tige de sortie 22 au plongeur de valve 9 est, comme sus-mentionné, le produit du rapport des sections du second disque 19 et de la portion avant de diamètre réduit 24 de l'élément intermédiaire 23, d'une part, et du rapport des sections du premier disque 13 et de la portion de l'extrémité avant 12 du plongeur de valve 9, d'autre part, ce qui augmente ainsi considérablement le rapport de sensibilité du servomoteur sans affecter le fonctionnement, réglé par ailleurs avec précision, du moyen de valve 8 et du plongeur de valve associé 9. Le rapport des sections transversales du premier disque 13 et de la portion avant du diamètre réduit 12 du plongeur de valve 9 est typiquement d'environ 2,5, le rapport des sections transversales du second disque 19 et de la portion avant de diamètre réduit 24 de l'élément intermédiaire 23 étant supérieur à 2,5 et inférieur à 5, typiquement de l'ordre de 4,5 pour fournir un rapport global d'environ 11.

Quoique la présente invention ait été décrite en relation avec un mode de réalisation particulier, elle ne s'en trouve pas limitée mais est au contraire susceptible de modifications et de variantes qui apparaîtront à l'homme de l'art. En particulier, les dimensions tant radiales qu'axiales des disques, de l'élément intermédiaire 23, de l'élément d'entretoise 17 et de l'extrémité arrière 21 de la tige de sortie 22 peuvent être adaptés, selon les types de servomoteurs et les types de systèmes de freinage associés.

## Revendications

1. Servomoteur d'assistance au freinage, comprenant: un piston d'assistance (4, 5) couplé à une tige de sortie (22) et renfermant un moyen de valve de distribution (8) actionné par un plongeur de valve (9) relié à une tige d'entrée du servomoteur, et un disque de réaction (13), confiné périphériquement, en contact de l'extrémité avant (12) du plongeur de valve (9), caractérisé en ce qu'il comprend en outre un second disque de réaction (19), confiné périphériquement, en contact de l'extrémité arrière (21) de la tige de sortie (22), et un élément intermédiaire étagé (23) interposé entre les deux disques de réaction (13, 19) et coopérant avec ces derniers, ledit élément intermédiaire (23) comportant une portion avant de diamètre réduit (24) s'étendant à coulissement dans un alésage central (18) d'un élément d'entretoise annulaire (17) formant un épaulement périphérique avant (20), ledit épaulement périphérique avant et ladite portion avant étant en contact de la face arrière du second disque (19), et une portion arrière (25) de diamètre sensiblement égal à celui du premier disque (13) et en contact de la face avant de ce dernier.

2. Servomoteur selon la revendication 1, caractérisé en ce que l'élément d'entretoise annulaire (17) est solidaire d'une cage tubulaire (15) supportée sur le piston d'assistance (4, 5) et dans laquelle sont confinés périphériquement les deux disques (13, 19).

3. Servomoteur selon la revendication 1 ou 2, caractérisé en ce que les deux disques (13, 19) sont sensiblement identiques.

4. Servomoteur selon 1, une des revendications 1 à 3, caractérisé en ce que la portion avant (24) de l'élément intermédiaire (23) a une section transversale inférieure à celle de l'extrémité avant (12) du plongeur de valve (9).

5. Servomoteur selon l'une quelconque des revendications 1 à 4, caractérisé en ce que le rapport des sections transversales de la portion avant (24) de l'élément intermédiaire (23) et du second disque (19) est inférieur à 5.

## Claims

1. Brake booster comprising: a booster piston (4, 5) coupled to an output rod (22) and containing a distribution valve means (8) actuated by a valve plunger (9) connected to an input rod of the booster, and a pressure disk (13) which is confined peripherally and in contact with the front end (12) of the valve plunger (9), characterized in that it additionally comprises a second pressure disk (19) which is confined peripherally and in contact with the rear end (21) of the output rod (22), and a stepped middle member (23) arranged between the two pressure disks (13, 19) and co-operating with the latter, said middle member (23) having a front portion on with a reduced diameter (24) slidably end extending inside a central bore (18) of an annular spacer member (17) forming a front peripheral shoulder (20), said front peripheral shoulder and said front portion being in contact with the rear face of the second disk (19), and a rear portion (25) which has a diameter substantially equal to that of the first disk (13) and in contact with the front face of the latter.

2. Booster according to Claim 1, characterized in that the annular spacer member (17) is integral with a tubular cage (15) which is supported on the booster piston (4, 5) and inside which the two disks (13, 19) are confined peripherally.

3. Booster according to Claim 1 or 2, characterized in that the two disks (13, 19) are substantially identical.

4. Booster according to any of Claims 1 to 3, characterized in that the front portion (24) of the middle member (23) has a cross-section less than that of the front end (12) of the valve plunger (9).

5. Booster according to any one of Claims 1 to 4 characterized in that the ratio between the cross-sections of the front portion (24) of the middle member (23) and the second disk (19) is less than 5.

**Patentansprüche**

1. Bremskraftverstärker, der enthält: einen Hilfskolben (4, 5), der mit einer Ausgangsstange (22) verbunden ist und der ein Verteilerventilmittel (8) einschließt, das durch einen Tauchkolben (9) bewegt wird, der mit einer Eingangsstange des Bremskraftverstärkers verbunden ist, und eine Reaktionsscheibe (13), die am Umfang umschlossen ist, in Berührung mit dem vorderen Ende (12) des Ventiltauchkolbens (9), dadurch gekennzeichnet, daß er außerdem eine zweite Reaktionsscheibe (19), die am Umfang umschlossen ist, in Berührung mit dem hinteren Ende (21) der Ausgangsstange (22), und ein absatzbildendes Zwischenelement (23) enthält, das zwischen die zwei Reaktionsscheiben (13, 19) zwischengelegt ist und mit diesem letzteren zusammenarbeitet, wobei das Zwischenelement (23) einen vorderen Teil mit verringertem Durchmesser (24), der sich gleitend in einer zentralen Zylinderbohrung (18) eines ringförmigen Stegelementes (17) erstreckt, das eine vordere umlaufende Schulter (20) bildet, wobei diese vordere umlaufende Schulter und der vordere Teil mit der hinteren Fläche der zweiten Scheibe (19) in Berührung sind, und einen hinteren Teil (25), dessen Durchmesser im wesentlichen gleich dem der ersten Scheibe (13) ist und der in Berührung mit der vorderen Seite der letzteren steht, aufweist.

2. Bremskraftverstärker nach Patentanspruch 1, dadurch gekennzeichnet, daß das ringförmige Stegelement (17) mit einem röhrenförmigen Käfig (15) fest verbunden ist, der von dem Bremskraftverstärkerkolben (4, 5) getragen wird und in dem die beiden Scheiben (13, 19) am Umfang umschlossen sind.

3. Bremskraftverstärker nach dem Anspruch 1 oder 2, dadurch gekennzeichnet, daß die beiden Scheiben (13, 19) im wesentlichen einander gleich sind.

4. Bremskraftverstärker nach einem der Ansprüche 1 bis 3, dadurch gekennzeichnet, daß der vordere Teil (24) des Zwischenelementes (23) einen Querschnitt aufweist, der kleiner als der am vorderen Ende (12) des Ventiltauchkolbens (9) ist.

5. Bremskraftverstärker nach einem der Ansprüche 1 bis 4, dadurch gekennzeichnet, daß das Verhältnis der Querschnitte des vorderen Teiles (24) des Zwischenelementes (23) und der zweiten Scheibe (19) kleiner als 5 ist.